# EUROPÄISCHE PATENTSCHRIFT

(11) **EP 2 362 090 B1**
(45) Veröffentlichungstag und Bekanntmachung des Hinweises auf die Patenterteilung: **08.01.2014**
(21) Anmeldenummer: 10401197.8
(22) Anmeldetag: 16.11.2010
(51) Int. Cl.: F03D 11/04

(54) **Nachjustierbare Flächengründung, bevorzugt aufgelöst, für Offshore-Windenergieanlagen**
Adjustable spread foundation, preferably separated, for offshore wind farms
Surface de fondation ajustable, de préférence démontée, pour éoliennes offshore

(30) Priorität: 22.12.2009 DE 102009055175
(43) Veröffentlichungstag der Anmeldung: 31.08.2011
(73) Patentinhaber: STRABAG Offshore Wind GmbH, 70567 Stuttgart (DE)
(72) Erfinder: Sommer, Jan, 70569 Stuttgart (DE); Graf, Robert, 71111 Waldenbuch (DE); Brosig, Stefan, 70563 Stuttgart (DE)

(56) Entgegenhaltungen:
- EP-A2- 1 691 073
- FR-A5- 2 225 030
- GB-A- 2 079 826

## Beschreibung

### Technisches Gebiet

Die Erfindung betrifft die Gründung von Offshore-Windenergieanlagen.

### Stand der Technik

Es ist bekannt, als Gründung für Offshore-Windenergieanlagen in den Boden eingerammte Monopiles, mit Pfählen verankerte Tripods oder Jackets, oder Schwerkraftfundamente einzusetzen.

Bei den Schwerkraftfundamenten handelt es sich um häuserblockgroße, sandgefüllte Betonhohlkästen, die auf dem Meeresboden auffliegen oder teilweise darin versenkt sind, und auf denen der Mast der Windenergieanlage errichtet ist.

Schwerkraftfundamente haben den Vorteil, ohne große Geräuschentwicklung auf dem Meeresboden abgesetzt zu werden und damit naturschützende Vorgaben erfüllen zu können. Meerestiere werden durch Lärmemission beim Einrammen bei alternativen Gründungsverfahren häufig hörgeschädigt und damit orientierungslos.

Zudem sollten Gründungen auch einfach rückbaubar sein, um neuen Technologien (z. B. größeren Anlagen) bei der Windenergiegewinnung nicht hinderlich zu sein, häufig wird die Rückbaubarkeit auch im Zusammenhang mit der Genehmigung gefordert.

Zur Einleitung der hohen Lasten aus dem Betrieb der Offshore-Windenergieanlagen in den Baugrund ist bei Schwerkraftfundamenten ein vollflächiger und kraftschlüssiger Kontakt zwischen Bauwerksohle und Baugrund zwingend erforderlich. Hierzu bedarf es der Herstellung eines gleichmäßigen und ebenen Planums unter Wasser durch Aushubarbeiten bis auf ausreichend tragfähige Bodenschichten oder der Aufschüttung von geeignetem Bodenmaterial.

In der Offenlegungsschrift EP 1 691 073 wird bereits ein kreuzförmiges Gründungselement aus Betonbalken mit definierten Lasteinleitungsbereichen beschrieben - es hat sich jedoch gezeigt, dass die erforderliche Genauigkeit in der Herstellung des Planums unter Offshore-Bedingungen in großer Tiefe auf dem Meeresgrund nur schwer zu erreichen ist. Auch spätere Schiefstellungen der Windkraftanlage infolge extremer Belastung - durch einen Jahrhundertsturm zum Beispiel - oder durch Setzungen im Baugrund sind bei dieser Gründungsart nur mit sehr großem Aufwand korrigierbar. Da die Effektivität und insbesondere die Funktionalität einer Offshore-Windenergieanlage u.a. von deren Vertikalität abhängt, kommt dem Ausrichten und Nachjustieren schiefstehender Offshore-Flachgründungen eine zentrale Bedeutung zu.

In der Offenlegungsschrift GB 207 9826 A wird eine Senkkastengründung offenbart, welche an der Unterseite der Senkkästen mit verpressbaren Kissen ausgestaltet ist, und die durch Einsinken in den Meeresboden in diesem verankert wird.

### Aufgabe der Erfindung

Aufgabe der Erfindung ist es, eine Gründung für eine Offshore-Windenergieanlage anzugeben, die kostengünstig ist, ein günstiges Tragverhalten hat, ohne große Lärmbelästigung vor Ort installiert werden kann und auf einfache Weise rückbaubar oder umsetzfähig ist. Darüber hinaus soll der kraftschlüssige Verbund unter dem Lasteinleitungsbereich sicher herstellbar und etwaige, im Nutzungszeitraum auftretende Schiefstellungen korrigierbar sein.

### Darstellung der Erfindung

Die Aufgabe wird durch die im Kennzeichen des Anspruchs 1 angegebenen Merkmale gelöst.

Grundlage der Erfindung ist eine flächenhafte Gründung (4), die auf dem Meeresboden (5) aufliegt oder teilweise darin versenkt ist, und auf der sich ein Unterbau (7) für den Mast (8) der Windenergieanlage, oder der Mast (8) der Windenergieanlage selbst, erhebt. Die Gründung wirkt flächig über einen Gründungskörper, der in Analogie zum Ständer eines Weihnachtsbaumes oder zu einem Schreibtischstuhl kreuzförmig ausgebildet ist. Hierzu beträgt das Verhältnis von Durchmesser zu Höhe ein Viertel oder weniger, bevorzugt ein Fünftel oder weniger.

Die Einhüllende der aufgelösten Gründungselemente bildet eine Grundfläche mit ähnlicher Wirkung (aber größerem Durchmesser und geringerem Masseverbrauch) wie ein durchgehendes, flächiges Schwerkraftfundament.

Die flächenhafte Schwerkraftgründung (4) weist Leerstellen (11) auf: Teile der aufgespannten Fläche sind weggelassen, wie z. B. auch beim fünfarmigen Stern als "Gründung" eines Drehstuhles oder dem dreibeinigen Fuß eines Stativs. In definierten Lasteinleitungsbereichen (2) am jeweils äußeren Ende des Baukörpers erfolgt der Abtrag der Bauwerkslasten in den Meeresgrund (5). Dort werden auch die daran angebrachten Stahlschürzen (9) in den Untergrund eingetrieben und nachträgliche Maßnahmen zum Kolkschutz ergriffen.

Kippmomente des Mastes (7 oder 8) und Vertikalkräfte werden in den Lasteinleitungsbereichen (2) der aufgelösten, flächigen Gründung aufgenommen und über Bodenpressungen an den Meeresboden (5) weitergegeben. Durch geeignete Maßnahmen wird sichergestellt, dass der Mittelteil der Gründung, über der sich der Mast (8) erhebt, hohl liegt. Wesentliches Merkmal der Erfindung ist, dass unter den Lasteinleitungsflächen (2) der Kraftschluss bei Erfordernis durch Verpressmaßnahmen erzielt wird.

Hierfür ist erfindungsgemäß bereits bei der onshore-Herstellung der Fundamente an entsprechenden Stellen der Lasteinleitungsbereiche (2) mindestens ein zunächst unbeaufschlagtes, ,leeres', flächiges Kissen (1) aus hochfestem textilem Material angeordnet und die zu mindestens einer späteren Beaufschlagung mit Verpressmaterial notwendigen Verpressleitungen (3) und - ventile im Fundament eingebaut. Das Material des Kissens ist ein bevorzugt wasserdurchlässiges, zugfestes Geotextil. Ein solches verpressbares Kissen (1) besteht aus einer oder bevorzugt mehreren Lagen, bzw. ist durch Trennlagen horizontal unterteilt, so dass nach dem Setzen des Fundamentes bei Bedarf zunächst ein erster Verpressvorgang erfolgen kann, der den notwendigen Kraftschluss zwischen Lasteinleitungsbereich (2) am Fundament und dem Meeresgrund (5) herstellt und eine Ausrichtung des Fundamentkörpers ermöglicht. In Abhängigkeit der zu erwartenden Pressungen in der Sohlfuge der flächigen Lasteinleitungsbereiche (2) werden Geogitter in die Kammern der Kissen (1) eingesetzt, um eine bessere Verteilung des Verpressgutes innerhalb der Kissen (1) zu erhalten. Bedarfsabhängig und messtechnisch unterstützt können jederzeit einzelne oder mehrere Fundamentpratzen mit (bevorzugt hydraulisch) aushärtendem Verpressmaterial unter Druck und mit steuerbarer Injektionsgutmenge angefahren werden. So können auch während der Nutzungsdauer der Windkraftanlage auftretende Schiefstellungen ausgeglichen und korrigiert werden.

Die flächenhafte Schwerkraftgründung (4) besteht in einem bevorzugten Fall aus einem Kreuz aus Betonbalken, an dessen Kreuzungspunkt sich der Unterbau / Mastuntersatz (7) oder der Mast (8) selbst, erhebt.

Im Mastbereich (7, 8) - oberhalb des Wasserspiegels - wird ein Neigungsmesssystem, z. B. ein Schlauchwaagensystem (10) oder Inklinometer-Messsysteme, installiert, das zunächst auftretende Schiefstellungen der Windkraftanlage erfasst und aufzeichnet. Nach dem Überschreiten von vorab definierten Grenzwerten können die Kissen (1) unter den Lasteinleitungsbereichen (2) gezielt mit Verpressmaterial - bevorzugt einem hydraulisch aushärtenden Material in ausreichend flüssiger Konsistenz, das die im Gründungsbereich erforderliche Materialfestigkeit erreicht - unter Druck beaufschlagt werden. Über den Verbrauch des Verpressmaterials kann die Dicke des nun aktivierten Kissens (1) bzw. der aktivierten Kissenlage und damit die Hebung der einzelnen Fundamentpratze gesteuert werden; ein undefinierter Materialverlust in den angrenzenden Boden ist - im Gegensatz zu herkömmlich Verpressvorgängen - ausgeschlossen.

Das Neigungsmesssystem (10) am Mast (7, 8) registriert die Bewegungen des Bauwerkes, die der vorausgegangenen Schiefstellung entgegen wirken. Wenn die geplante Stellung des Mastes (7, 8) erreicht ist, wird der Verpressvorgang beendet. Hierfür werden die Pumpen abgeschaltet und die fest installierten Verpressleitungen (3) druckdicht verschlossen. Für spätere Verpressvorgänge vorgesehene Verpressleitungen (3) bleiben zunächst ungenutzt.

Für zusätzliche Justierung schiefstehender Flachgründungselemente durch Kompensationsinjektionen in den Meeresgrund werden bereits bei der Onshore-Herstellung der Gründungskörper Leerrohre (12) eingebaut, um eine spätere Beschädigung der Spannglieder innerhalb der Gründungsstruktur durch Kernbohrungen zu vermeiden. Für die Nachjustierung durch Kompensationsinjektionen wird eine Meeresbohrmaschine - wie sie für die Entnahme von Bohrkernen zur Erforschung der Gashydrate im Meeresboden verwendet wird - auf die Gründung abgelassen. Durch die Leerrohre (12) wird eine verrohrte Bohrung bis in eine Tiefe von mehreren Metern unterhalb der Lasteinleitungsbereiche (2) geführt. Im Anschluss daran werden Manschettenrohre in die Bohrung eingestellt, das Bohrrohr gezogen und der Ringraum sukzessive verdämmt. Durch das direkte Ansteuern der Packer und den Eintrag von Zementsuspension unter Druck wird der Boden unterhalb des Lasteinleitungsbereiches (2) in verschiedenen Tiefen aufgesprengt und mit Injektionsgut verfüllt. Der zusätzliche Materialeintrag führt zu einer Volumenzunahme des Baugrundes unterhalb der injizierten Flächen und bewirkt eine Ausrichtung der Windenergieanlage mit zusätzlicher Verfestigung des Bodens.

Typische ungefähre Abmessungen eines Kreuzes aus Betonbalken (6) und Mastuntersatzes (7) einer erfindungsgemäßen flächenhaften Schwerkraftgründung (4) für Windenergieanlagen mit einer Leistung von ca. 3 bis 5 MW weisen bei einer Wassertiefe von 15 bis 40 Metern einen Durchmesser von 25 bis 40 Metern auf. Die Breite eines Betonbalkens (6) beträgt ungefähr 8,5 Meter, seine Höhe etwa 8,0 Meter. Bevorzugt ist eine steife Verbindung zwischen Gründung und Mastuntersatz (7) oder Mast (8).

Im Lasteinleitungsbereich (2) erfolgt ein Anfüllen des Gründungselementes auf ein bis zwei Drittel der Bauhöhe. Die Wandstärke des als Hohlprofil ausgelegten Kreuzes aus Betonbalken (6) beträgt ungefähr 0,5 Meter. Am Ende der Betonbalken (6) befinden sich Stützfüße als Betonlastplatten von ungefähr 8 auf 16 Metern und einer Stärke von ungefähr 1,0 Metern. Der Lasteinleitungsbereich (2) wird von einer Stahlschürze (9) eingefasst, die etwa 50 Zentimeter in das vorbereitete Planum am Meeresgrund (5) einbindet. Innerhalb dieser Schürzen sind die Kissen (1) aus geotextilem Material - in Teilbereichen oder vollflächig - angeordnet. In beaufschlagtem Zustand kann jede einzelne Lage der Kissen (1) bis zu 50 Zentimeter dick werden, es werden eine oder mehrere - in der Regel zwei - Kissenlagen für jeden Lasteinleitungsbereich (2) vorgesehen.

Der als Betonrohr ausgeführte Mastuntersatz (7) hat im unteren Bereich eine Wandstärke von ungefähr 0,9 Meter, oberhalb des Wasserspiegels (ungefähr 15 bis 20 Meter), wo der Mast (8) der Windenergieanlage angeflanscht wird, noch ungefähr 0,6 Meter. Jede Kissenlage ist an eine oder mehrere Verpressleitung (3) angeschlossen, die innerhalb der Betonbalken (6) zum Mast (7, 8) hin und in diesem nach oben bis bevorzugt über die Wasseroberfläche verlaufen. Dort befinden sich die Verpressanschlüsse.

Bei einer Variante der Erfindung werden diese Verpressleitungen (3) nicht nur als Verpressrohre eingesetzt, sondern auch als Saugrohre durch die hindurch ein Unterdruck unter einem oder mehreren Lasteinleitungsbereichen (2) erzeugt werden kann, um die Windenergieanlage bei Extrem-Einwirkungen (Sturm, Tsunami) am Boden temporär festzusaugen und dadurch zusätzlich zu sichern. Bevorzugt weist das Fundament ringsum den Lasteinleitungsbereich (2) in den Untergrund einbindende Schürzen (9) auf, die die Fläche gegen seitliches Eindringen von Wasser abdichten. Der Unterdruck wird mittels mindestens einer Pumpe erzeugt, die Wasser durch ein Filtermaterial - das mit dem Kissen (1) kombiniert sein kann und den Austrag von Boden verhindert - saugt. Die Pumpe kann eine elektrische oder mit Verbrennungsmotor betriebene oder eine Mammutpumpe sein, gegebenenfalls sind bei der Fundamentherstellung bereits entsprechend zusätzlich erforderliche Leitungen und Anschlüsse vorzusehen. Die Anordnung einer Pumpe ist bevorzugt oberhalb des Meeresspiegels vorzusehen, da so Wartungsarbeiten erleichtert werden.

Variationen zu diesen Richtwerten der Abmessungen sind möglich und tragen dann den Bedingungen vor Ort Rechnung. Sowohl die Betonbalken (6), als auch der Mastuntersatz (7) bestehen aus in der Regel vorgespanntem Beton. Die Betonbalken (6) sind eben oder zum Mittelpunkt der Gründung hin leicht (z.B. ungefähr 2°) aufwärts geneigt.

Die Figuren zeigen beispielhaft schematische Ausführungsformen mit einem Kreuz aus Betonbalken (6) als Gründung.

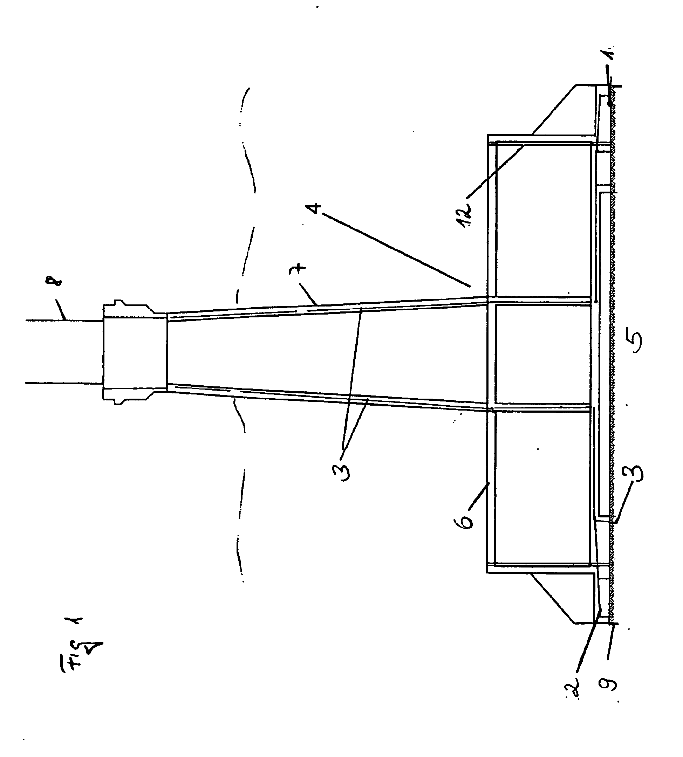

Fig. 1 zeigt die Gründung einer Windenergieanlage im Querschnitt mit erfindungsgemäßer flächenhafter Schwerkraftgründung (4) durch ein Betonkreuz, welches - in bevorzugter Ausführung - steif mit dem Mastuntersatz / Mast (7, 8) verbunden ist. Das Betonkreuz sitzt mit Stützfüßen (2) auf dem Meeresboden (5) auf. In der Sohlfuge zwischen Lasteinleitungsbereich (2) und Meeres boden (5) befindet sich ein zum Absetzzeitpunkt unbeaufschlagtes flächiges Kis-sen (1) aus hochfestem textilem Material, das bevorzugt wasserundurchlässig ist. Durch das Betonkreuz der Gründung verlaufen Leerrohre für die Verpresseinrichtung und Leerrohre (12) für spätere Kompensationsinjektionen.

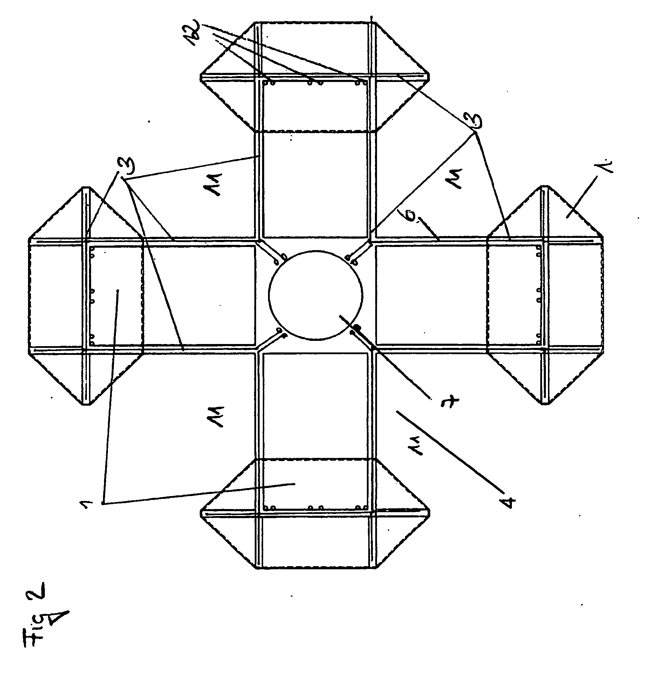

Fig. 2 zeigt in der Draufsicht eine flächenhafte Schwerkraftgründung (4) in Form eines Betonkreuzes mit Lasteinleitungsbereichen (2) und Leerrohren (3, 12).

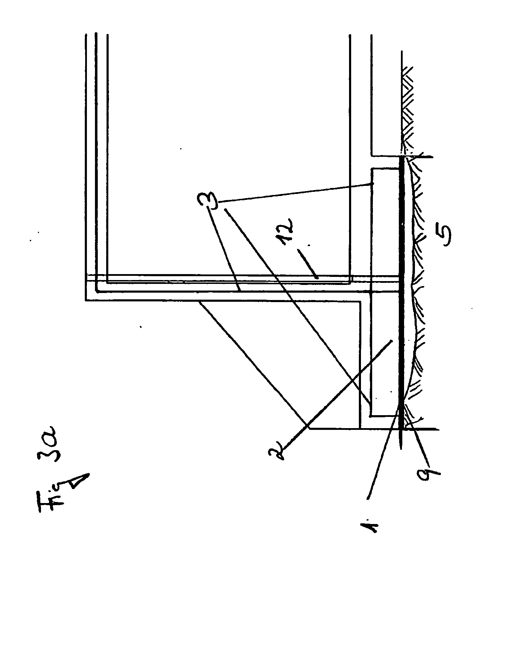

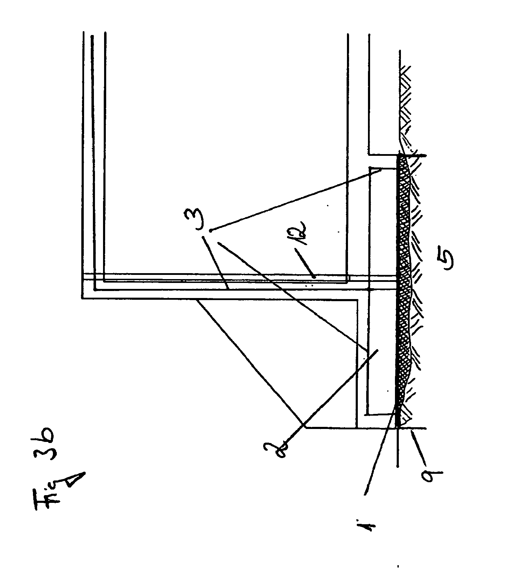

Fig. 3a zeigt ein Detail des Gründungskörpers mit einem Lasteinleitungsbereich (2). Zwischen Lasteinleitungsbereich (2) und Meeresboden (5) befindet sich ein zunächst mit Verpressmaterial unbeaufschlagtes Kissen (1), die Hohllage des Gründungskörpers (2) ist schematisch dargestellt. In Fig. 3b ist das Kissen (1) mit Verpressmaterial gefüllt, der Kraftschluss zwischen Meeresboden (5) und Gründungskörper (2) ist hergestellt. Entlang der Lasteinleitungsbereiche (2) verlaufen Stahlschürzen (9), die in den Meeresgrund (5) einbinden. Durch den Betonkörper der Gründung und der Lasteinleitungsbereiche (2) führen Leerrohre (12) für Kompensationsinjektionen.

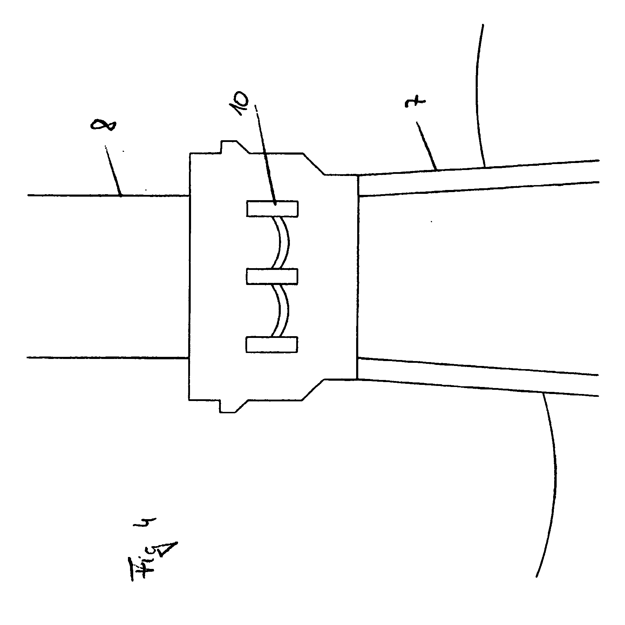

Fig. 4 zeigt das Messsystem (10) im Mast (7) oberhalb der Wasseroberfläche.

### Bezugszeichenliste

- 1: verpressbares Kissen
- 2: Stützfuß / Lasteinleitungsbereich
- 3: Verpressleitung mit Ventilen
- 4: Flächenhafte Schwerkraftgründung
- 5: Meeresboden
- 6: Betonbalken, einzeln oder auch Teil eines Gesamtkreuzes
- 7: Unterbau/Mastuntersatz
- 8: Mast der Windenergieanlage
- 9: Stahlschürze
- 10: Schlauchwaagensystem
- 11: Leerstelle in der flächenmäßigen Gründung
- 12: Leerrohr

## Patentansprüche

1. Flächenhafte Schwerkraftgründung (4) für eine Offshore-Windenergieanlage, die Kippmomente des Mastes (7, 8) als Flächendruck an den Meeresboden (5) überträgt, wobei die Lasteinleitung in den Meeresgrund in definierten Bereichen (2) erfolgt,
**dadurch gekennzeichnet, dass** unter den an den äußeren Enden der Gründung liegenden Lasteinleitungsbereichen (2) mehrkammrige verpressbare Kissen (1) angeordnet sind, die jederzeit und mehrfach mit Material unter Druck beaufschlagt werden können und so eine nachträgliche Verbesserung des Kraftschlusses sowie einen nachträglichen Ausgleich von Schiefstellungen - auch während der Nutzungsdauer - ermöglichen.

2. Flächenhafte Schwerkraftgründung (4) nach Anspruch 1,
**dadurch gekennzeichnet, dass** die Kissen (1) aus wasserdurchlässigem, zugfestem, geotextilem, Material bestehen.

3. Flächenhafte Schwerkraftgründung (4) nach mindestens einem der Ansprüche 1 bis 2,
**dadurch gekennzeichnet, dass** die flächenhafte Schwerkraftgründung (4) als vorgefertigtes oder aus einzelnen Betonbalken (6) zusammengesetztes Betonkreuz ausgeführt ist und mit entsprechenden Kissen (1) und allen zugehörigen Verpressleitungen (3) und -ventilen versehen ist.

4. Flächenhafte Schwerkraftgründung (4) nach dem Anspruch 3,
**dadurch gekennzeichnet, dass** die Verpressleitungen (3) im Beton des Balkenelementes und des Masts (7, 8) verlaufen.

5. Flächenhafte Schwerkraftgründung (4) nach mindestens einem der Ansprüche 3 bis 4,
**dadurch gekennzeichnet, dass** die Verpressleitungen (3) bis über die Wasseroberfläche geführt sind und von dort - im Trockenen - beaufschlagt werden.

6. Flächenhafte Schwerkraftgründung (4) nach mindestens einem der Ansprüche 3 bis 5,
**dadurch gekennzeichnet, dass** das Gründungselement zusätzlich zu den Verpressleitungen (3) über Saugleitungen zu den Lasteinleitungsbereichen (2) verfügt.

7. Flächenhafte Schwerkraftgründung (4) nach Anspruch 6,
**dadurch gekennzeichnet, dass** Verpressleitungen (3) und Saugleitungen mindestens teilweise identisch sind.

8. Flächenhafte Schwerkraftgründung (4) nach mindestens einem der Ansprüche 1 bis 7,
**dadurch gekennzeichnet, dass** die flächenhafte Schwerkraftgründung (4) zumindest während der Verpressung der Kissen (1) mit einem Neigungsmesssystem ausgestattet ist.

9. Flächenhafte Schwerkraftgründung (4) nach Anspruch 8,
**dadurch gekennzeichnet, dass** das Neigungsmesssystem ein Inklinometer-Messsystem ist.

## Claims

1. Flat gravity foundation (4) for an offshore wind energy plant which transmits tilting moments of the mast (7, 8) as surface pressure to the sea bed (5), wherein the load introduction into the sea bed takes place in defined regions (2), **characterized in that** multi-chamber compressible cushions (1) are arranged under the load introduction regions (2) situated at the outer ends of the foundation, which cushions can be supplied at any time and multiply with material under pressure and thus allow a subsequent improvement of the non-positive engagement and a subsequent compensation of misalignments - even during the use duration.

2. Flat gravity foundation (4) according to Claim 1, **characterized in that** the cushions (1) consist of a water-permeable, high-tensile-strength, geotextile material.

3. Flat gravity foundation (4) according to at least one of Claims 1 and 2, **characterized in that** the flat gravity foundation (4) is designed as a prefabricated concrete cross or a concrete cross composed of individual concrete beams (6) and is provided with corresponding cushions (1) and all associated compression lines (3) and valves.

4. Flat gravity foundation (4) according to Claim 3, **characterized in that** the compression lines (3) extend in the concrete of the beam element and of the mast (7, 8).

5. Flat gravity foundation (4) according to at least one of Claims 3 and 4, **characterized in that** the compression lines (3) are guided beyond the water surface and from there are supplied in the dry state.

6. Flat gravity foundation (4) according to at least one of Claims 3 to 5, **characterized in that**, in addition to the compression lines (3), the foundation element has suction lines leading to the load introduction regions (2).

7. Flat gravity foundation (4) according to Claim 6, **characterized in that** compression lines (3) and suction lines are at least partially identical.

8. Flat gravity foundation (4) according to at least one of Claims 1 to 7, **characterized in that** the flat gravity foundation (4) is equipped with an inclination measuring system at least during the compression of the cushions (1).

9. Flat gravity foundation (4) according to Claim 8, **characterized in that** the inclination measuring system is an inclinometer measuring system.

## Revendications

1. Surface de fondation (4) pour une installation éolienne offshore, qui transfère des couples de basculement du mât (7, 8) sous forme de pression superficielle au fond de la mer (5), l'introduction de charge dans le fond de la mer s'effectuant dans des régions définies (2),
**caractérisée en ce que** des coussins (1) comprimables à plusieurs chambres sont disposés sous les régions d'introduction de charge (2) situées au niveau des extrémités extérieures de la fondation, lesquels coussins peuvent être sollicités à chaque fois et à plusieurs reprises par une matière sous pression et permettent ainsi une amélioration ultérieure de l'engagement par force ainsi qu'une compensation ultérieure des zones de gauchissement - même au cours de la période d'utilisation.

2. Surface de fondation (4) selon la revendication 1, **caractérisée en ce que** les coussins (1) se composent de matière perméable à l'eau, résistante à la traction et géotextile.

3. Surface de fondation (4) selon au moins l'une quelconque des revendications 1 à 2,
**caractérisée en ce que** la surface de fondation (4) est réalisée sous forme de croix en béton préfabriquée ou constituée de poutres en béton (6) individuelles, et est pourvue de coussins (1) correspondants et de toutes les conduites et soupapes de pression (3) associées.

4. Surface de fondation (4) selon la revendication 3,
**caractérisée en ce que** les conduites de pression (3) s'étendent dans le béton de l'élément de poutre et du mât (7, 8).

5. Surface de fondation (4) selon au moins l'une quelconque des revendications 3 à 4,
**caractérisée en ce que** les conduites de pression (3) sont guidées jusqu'au-dessus de la surface de l'eau et sont sollicitées à cet endroit, au sec.

6. Surface de fondation (4) selon au moins l'une quelconque des revendications 3 à 5,
**caractérisée en ce que** l'élément de fondation dispose en plus des conduites de pression (3) de conduites d'aspiration conduisant aux régions d'introduction de charge (2).

7. Surface de fondation (4) selon la revendication 6,
**caractérisée en ce que** les conduites de pression (3) et les conduites d'aspiration sont au moins en partie identiques.

8. Surface de fondation (4) selon au moins l'une quelconque des revendications 1 à 7,
**caractérisée en ce que** la surface de fondation (4) est munie, au moins pendant la mise sous pression des coussins (1), d'un système de mesure de l'inclinaison.

9. Surface de fondation (4) selon la revendication 8,
**caractérisée en ce que** le système de mesure de l'inclinaison est un système de mesure à inclinomètre.
